# EUROPEAN PATENT APPLICATION

(11) **EP 4 848 155 A1**
(43) Date of publication of application: **02.12.2026**
(21) Application number: 25305756.6
(22) Date of filing: 26.05.2025
(51) Int. Cl.: G06N 10/20, G06N 10/80

(54) **METHOD FOR BUILDING DISTRIBUTABLE PACKETS OF A QUANTUM CIRCUIT FOR EXECUTION IN A DQC ENVIRONMENT**

(71) Applicant: welinq, 75011 Paris (FR)
(72) Inventor: Ioannis, Lavdas, grèce (GR); Walter, Nadalin, Italie (IT); Mathys, Rennala, France (FR); Jimmy, Rotureau, France (FR); Riccardo, Mengoni, 62100 Italie (IT)
(74) Representative: Ipsilon

(57) **Abstract**

A computer implemented method for building distributable packets of a quantum circuit comprising an ordered sequence of controlled gates for execution in a DQC environment, a distributable packet rooted in a qubit *c* being a sequence of consecutive quantum gates satisfying:
- a) every controlled gate in the distributable packet is controlled by c,
- b) every single-qubit gate that is not diagonal or anti-diagonal in the distributable packet is not controlled by c,
the method comprising building distributable packets by running an algorithm to identify gates that can be grouped into distributable packets, the algorithm comprising testing for possible increase of the number of controlled gates in currently built distributable packets through checking the possible application of a set of rules comprising a concatenation rule, a commutation rule and a control-switching rule.

## Description

### Background of the invention

Distributed Quantum Computing (DQC) is a promising way to scalability by interconnecting multiple Quantum Processing Units (QPUs) through quantum links. Examples of QPU's include IBM's Quantum Heron, Google Quantum AI's Sycamore-2, Rigetti Computing's Ankaa Series, IonQ's Forte, among others, the invention not being limited to a particular technology of QPU.

Critical to DQC is quantum teleportation, which allows for the transfer of quantum information between processors, overcoming physical qubit interaction limits.

To execute a quantum circuit in a DQC environment, it is necessary to determine which qubits will be allocated to different QPUs and then implement gate and/or qubit teleportation to enable interactions involving qubits separated across different QPUs.

The article Automated distribution of quantum circuits via hypergraph partitioning Pablo Andres-Martinez et al. (https://arxiv.org/pdf/1811.10972) discloses an automated method to distribute quantum circuits over multiple agents, minimising quantum communication between them. This approach applies some gate reordering but is limited to a restricted gate set made only of one-qubit gates and CZ gates.

The article Distributing circuits over heterogenous, modular quantum computing network architectures Pablo Andres-Martinez et al. (arXiv:2305.14148v3 [quant-ph] 10 Jul 2023) discloses several methods for transforming a given quantum circuit into one implementable on a heterogeneous network of quantum computing modules while minimising the number of entangled resources required to do so. The method is limited in terms of types of gates that can be handled.

The article Compiler for Distributed Quantum Computing: a Reinforcement Learning Approach Panagiotis Promponas et al. (arXiv:2404.17077v1 [quant-ph] 25 Apr 2024 discloses a compiler for DQC. This article focuses on an approach based on machine learning.

The article Divide and Conquer for Combinatorial Optimization and Distributed Quantum Computation Teague Tomesh et al. (arXiv:2107.07532v3 [quant-ph] 12 Oct 2023) discloses an algorithm for solving the MIS (Maximum Independent Set) in a distributed fashion on logical QPUs.

The article A Modular Quantum Compilation Framework for Distributed Quantum Computing Davide Ferrari et al. (arXiv:2305.02969v1 [quant-ph] 4 May 2023) discloses an algorithm where qubit assignment is obtained by solving a graph partitioning problem where the sum of edge's weights that straddle different partitions is minimized. An algorithm is used that scans the quantum circuit gate by gate based on the current partitioning and stops when it encounters a gate that based on the current partitioning involves qubits on different QPUs. The algorithm then searches for feasible Teledata operations that could be covered by teleporting one or both qubits on a common QPU. Telegate operations are scheduled in a similar manner to Teledata ones. No gate reordering is implemented.

The article Generalised Circuit Partitioning for Distributed Quantum Computing Felix Burt et al. (arXiv:2408.01424v2 [quant-ph] 20 Jan 2025) discloses a graphbased formulation for joint optimisation of gate and state teleportation cost, including extensions of gate teleportation which group gates together for distribution using common resources. No gate reordering is implemented.

The article AutoComm: A Framework for enabling Efficient Communication in Distributed Quantum Programs (arXiv:2207.11674v2 [quant-ph] 21 Oct 2022) aims at overcoming the shortcomings of existing compilers using a particular qubit-node communication pattern. Some gate reordering is implemented but after an allocation map of qubits to QPUs has been given.

The article Optimized Quantum Circuit Partitioning Across Multiple Quantum Processors from Cisco Quantum Labs (arXiv:2501.14947v1 [quant-ph] 24 Jan 2025) discloses a method for partitioning a quantum circuit based on graph partitioning to optimize both qubit and gate teleportation, minimizing EPR pairs for executing the circuit. This method relies on window-based partitioning, which limits the overall performance. No gate reordering is implemented.

The article A multilevel framework for partitioning quantum circuits https://arxiv.org/abs/2503.19082 discloses an hypergraph , and its set of vertices is composed by many vertices for each qubit. Each vertex is associated with both a gate and a qubit.

The article CollComm: Enabling Efficient Collective Quantum Communication Based on EPR buffering https://arxiv.org/pdf/2208.06724, Efficient distribution of quantum circuits https://drops.dagstuhl.de/entities/document/10.4230/LIPIcs.DISC.2021.41

*The article* Distribution of Quantum Circuits Over General Quantum Networks https://arxiv.org/abs/2206.06437 do not implement any type of gate reordering.

### Summary of the invention

There remains a need for efficiently distributing computing tasks across multiple quantum devices and the present invention aims at satisfying this need.

Exemplary embodiments of the invention relate to a computer implemented method for building distributable packets of a quantum circuit comprising an ordered sequence of controlled gates for execution in a DQC environment, a distributable packet rooted in a qubit c being a sequence of consecutive quantum gates satisfying:
- a) every controlled gate in the distributable packet is controlled by *c*,
- b) every single-qubit gate that is not diagonal or anti-diagonal in the distributable packet is not controlled by *c*,
the method comprising building distributable packets by running an algorithm, preferably a heuristic one that iterates through the quantum circuit, to identify gates that can be grouped into distributable packets, the algorithm comprising testing for possible increase of the number of controlled gates in currently built distributable packets through checking the possible application of a set of rules comprising a concatenation rule, a commutation rule and a control-switching rule.

The algorithm tries to apply all these three rules when building the distributable packets.

A single-qubit gate is said to be diagonal or anti-diagonal if the 2×2 unitary matrix it corresponds to is diagonal or anti-diagonal. Examples of such gates are the Pauli gates X, Y or Z.

In the present invention, the circuit is allowed to contain any possible gate, as the size of distributable packets may be increased whenever pairwise permutation between commuting gates satisfy said rules. The invention avoids having to transpile a native gate into a gate set made of the Hadamard gate, the Z-rotation gate Rz and the controlled Z-rotation gate CRz which results in more distributable packets being attainable via pairwise permutations. The invention is not limited to the reordering of a restricted set of gates contrary to some of the prior art discussed above, as the invention moves and groups gates whenever possible.

The determining of the allocation map is based on mapping and partitioning may occur after the building of the distributable packets.

The method may comprise generating the Distributed Quantum Circuit (DQC) comprising the distributable packets thus built. This DQC may be outputted as a quantum algorithm suitable for execution in a quantum environment, using conventional description of the quantum algorithm (also called quantum circuit) and may be implemented physically in a manner known per se using QPU's hardware and quantum and classical communication links.

Preferably, the algorithm is performed without transpilation of at least one gate of the quantum circuit other than Hadamard, Rz and CRz prior to commuting this gate with another controlled gate.

A distributable packet is a sequence of consecutive gates which can be implemented across two quantum devices using a single quantum communication protocol for the entire packet. A distributable packet is such that it can be distributed across k devices, with an upper bound of k-1 quantum communication protocols for k-partite distribution.

The invention allows to reduce the distribution cost thanks to rearranging the gates in the quantum circuit in a way that preserves the algorithm computed by the quantum circuit. When distributing quantum circuits across a network of quantum devices, the invention allows to use only one quantum communication protocol per distributable packet, instead of one quantum communication protocol per non-local controlled gate. The invention thus significantly reduces the number of quantum links required, thereby resulting in a more efficient implementation of distributed quantum algorithms.

It overall improves the performance of distributed quantum algorithms. In addition, running a distributed quantum algorithm with low quantum communication cost means that the distributed computation is less affected by the latency and communication error of the quantum link.

The invention is adaptable to various quantum network architectures and supports a wide range of quantum algorithms, making it a versatile tool for quantum computing applications and practical solutions across many industries.

The concatenation rule consists in concatenation of consecutive distributable packets.

The commutation rule consists in pairwise permutations of commuting gates.

The control-switching rule consists in a change of a leading control qubit in the presence of multi-controlled gates, i.e. gates with more than 1 control qubit.

Accordingly, at least one of the distributable packets may comprise gates of the initial circuit that have been commuted and/or have experienced a change in the leading control qubit.

The gates may be scanned from the beginning of the sequence of gates to the other end of the sequence. In a variant, the gates are scanned starting from a random position in the sequence and then the algorithm considers subcircuits of gates which are not yet contained in a distributable packet.

The method may comprise identifying a controlled gate G that is not assigned yet to a distributable packet, and either move it to a group of gates with which it can form a distributable packet, or move additional gates next to G so that they form to a distributable packet, allowed moves be determined by possible pairwise commutation of gates, the method preferably being performed until there are no gates outside of a distributable packet.

The method may comprise for a given distributable packet built during the course of the algorithm (and that may contain already more than two gates) trying to build a larger packet by adding to this packet a gate that is not subsequent to the packet in the sequence.

The method may comprise for a given distributable packet built during the course of the algorithm (and that may contain already more than two gates) trying to build a larger packet by moving the packet in the sequence, for example before a gate with which it can form a larger distributable packet.

The circuit may comprise at least one gate other than H and CNOT, selected among SWAP, CV, piSWAP(theta), Givens(theta), fSim and Sycamore, such gate not having been transpiled before execution of the algorithm.

One may refer to Gates, States, and Circuits Quantum Gates Tech. Note 014 v0.11.0 beta https://threeplusone.com/gates https://github.com/gecrooks/on gates for the definition of these gates.

SWAP gates can be implemented natively on ion trap architectures with laser pulses, photonic architectures with beam splitters and phase shifters, neutral atom architectures with controlled atom collisions. The invention avoids the need to transpile each SWAP gate into 3 CNOT gates, leading to potentially more distributable packets.

CV (controlled-V) gates are commonly used when one wants partial entanglement, especially in the context of error correction. (see e.g. https://journals.aps.org/prl/abstract/10.1103/PhysRevlett.121.180502
https://arxiv.org/abs/2102.06117 )

Two qubits partial rotation gates such as piSWAP(theta), Givens(theta), fSim and Sycamore are very useful in quantum machine learning (https://www.sciencedirect.com/science/article/pii/S1574013724000030) and quantum chemistry ( https://arxiv.org/abs/2106.13839 ), and native to Google's Sycamore architecture and Rigetti's. The present invention may avoid transpiling such gates to make distributable packets, which would remove the benefits of having them as easily implementable native gates, on top of making their distribution more complicated.

However, the invention may comprise rewriting or transpilation of the circuit if appropriate to minimize at least one given type of gate to take into account that some gates are more difficult to implement on some kind of QPU hardware than others. The rewriting or transpilation may also comprise removing unnecessary repetitions of controlled gates.

The algorithm may comprise building distributable packets by grouping gates of the quantum circuit prior to checking for reordering to increase the number of controlled gates in said distributable packets.

Exemplary embodiments of the invention also relate to a method for DQC implementation of a quantum circuit comprising performing the method as defined above to determine distributable packets and implementing the quantum circuit on a DQC environment based on said distributable packets.

Exemplary embodiments of the invention also relate to a computer readable program product (non-transitory) comprising a set of instructions that when executed on a computer system generate distributable packets based on an inputted quantum circuit comprising an ordered sequence of controlled gates, for execution of said quantum circuit in a DQC environment, a distributable packet rooted in a qubit c being a sequence of consecutive quantum gates satisfying :
- a) every controlled gate in the distributable packet is controlled by c,
- b) every single-qubit gate that is not diagonal or anti-diagonal in the distributable packet is not controlled by c,
the instructions causing the iteration of an algorithm, preferably a heuristic one, through the quantum circuit to identify gates that can be grouped into distributable packets, the algorithm comprising testing for possible increase of the number of controlled gates in currently built distributable packets through checking the possible application of a set of rules comprising a concatenation rule, a commutation rule and a control-switching rule. The algorithm may be performed without transpilation of at least one gate of the quantum circuit other than Hadamard, Rz and CRz prior to commuting this gate with another controlled gate, as mentioned above.

This program may be recorded on a storage medium or downloaded from a server.

### Brief description of the drawings

In the drawings:
Figure 1 is a schematic view of a DQC showing communication links between QPUs,
Figure 2 is an example of gate teleportation across two QPUs,
Figure 3 is an example of extended gate teleportation between two QPUs,
Figure 4 is an example of gate concatenation,
Figure 5 is an example of gate commutation,
Figure 6 is an example of gate control-switching,
Figure 7 is an example of gate reordering,
Figure 8 is another example of gate reordering, and
Figure 9 is an example of building distributable packets.

### Detailed description

The method according to the invention may be performed on any computer such as a personal computer or a client-server computer network. The program that is executed to perform the method is also called a quantum compiler.

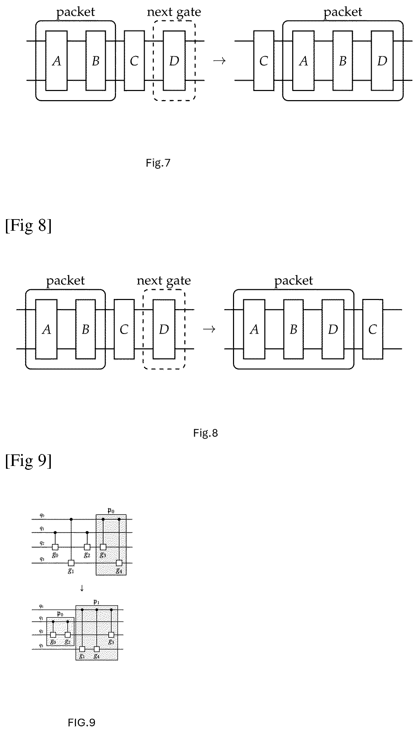

The program may receive as an input a description of at least one quantum circuit in accordance with the standards in this field, using accepted symbols for the various kind of gates, similarly as in the example given in Figure 9. The description may be inputted similarly as do some quantum software like Qiskit.

The program may prompt the user to enter a monolithic quantum circuit, and the architecture of the interconnected quantum devices it should be executed on.

The program may output a communication protocol to be executed on the DQC given as input.

The program may recombine communication protocols to be executed from one DQC to another.

### Definitions

*A circuit* is a sequence of consecutive gates g₁ ; ··· ; gₘ .

Two circuits are equivalents if they correspond to the
same unitary matrix. Two equivalent circuits g₁ ; ...;gₘ and
h₁;...;hₙ are noted g₁ ;...;gₘ = h₁ ;...;hₙ .
ctrl(g) is the set of control qubits of a given gate g. If it exists, trgt(g) is the set of target qubits of g, so that g is a gate acting on ctrl(g) ∪ trgt(g).

*A **monolithic*** quantum algorithm is executed entirely on a single quantum device.

*A **distributed*** quantum algorithm is executed across a network of quantum devices.

*A **quantum algorithm*** is a sequence of gates that all can be local (monolithic algorithm) or a sequence of gates where some gates are non-local (distributed algorithm).

In ***Distributed Quantum Computing*** (DQC), interconnected quantum devices work together to execute algorithms that demand a number of qubits beyond the capacity of a single current device. To achieve this, a monolithic algorithm should be partitioned into subcircuits, and remote gates are performed via quantum communication protocols.

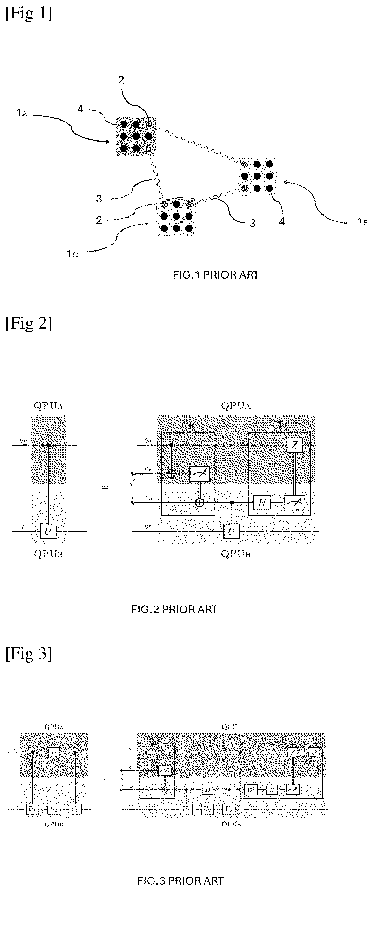

Figure 1 shows an example of a DQC network where three QPUs 1_{A} to 1_{C} having data qubits 4 are interconnected through quantum links 3 and communication qubits 2. The QPUs may have the same hardware (homogeneous DQC) or be different hardware (heterogeneous DQC).

***Data qubits*** are the non-communication qubits. They are the ones used to perform the actual computation on a quantum device. A quantum link may be implemented as a Bell pair, that is an entangled state between two communication qubits.

*A **communication qubit*** is a quantum bit used to transmit quantum information between QPUs. It is typically implemented as an entangled state. An example of such state is the Bell pair, formed by maximizing the entanglement between two qubits.

*A **quantum communication protocol*** allows spatially separated quantum devices to be connected. A non-local quantum operation is a quantum operation performed between two spatially separated quantum devices. Naively, any non-local quantum operation can be implemented by one quantum communication protocol. Quantum communication protocols may be implemented via ***gate teleportation*** as illustrated in Figure 2 and detailed at https://arxiv.org/pdf/quant-ph/0005101 directing to arXiv:quant-ph/0005101v2 25 Jun 2003 Optimal local implementation of non-local quantum gates*.*

The ***distribution cost*** is defined as the number of communication protocols required to perform the distributed quantum algorithm.

*A **distributable packet*** is a sequence of consecutive gates that can be implemented non-locally, with its control qubit wire on one device, and its target qubits on another device(s). In other words, a distributable packet is a sequence of consecutive gates whose control can be distributed across two quantum devices using only one quantum communication protocol, while maintaining computational correctness.

A distributable packet rooted in a qubit c is a sequence of consecutive gates such that:
- every controlled gate in the distributable packet is controlled by c.
- if a single-qubit gate in the distributable packet is on c, then it is (anti-)diagonal.

In other words, a sequence of gates is a distributable packet rooted in a qubit c if it holds that $c ∈ \left({∩}_{g ∈ C : \left|g\right| \geq 2}ctrl\left(g\right)\right) \ \left({∪}_{g ∈ {Δ}_{C} : \left|g\right| = 1} trgt \left(g\right)\right)$ where Δ_{C} is the set of all single-qubit gates in C corresponding to (anti-)diagonal 2-by-2 unitaries.

One may refer to *Generalized GHZ States and Distributed Quantum Computing* at arXiv:quant-ph/0402148v3, especially section 3.2.

The distributable packet may be distributed according to an extended telegate protocol as shown in Figure 3, in case D is a diagonal or anti-diagonal and U1, U2 and U3 linear and unitary operators. In that case, the telegate protocol may be implemented based on Theorem 5 of the article Entanglement-efficient bipartite-distributed quantum computing Jun-Yi Wu et al (arXiv:2212.12688v3 [quant-ph] 29 Nov 2023).

### Distributability under depth-invariant circuit equivalences

Distributability for classes of equivalent circuits means that circuits are distributable up to circuit equivalences. The equational theory for quantum circuits developed in https://arxiv.org/pdf/2206.10577 describes axioms for circuit equivalences in Fig. 3, that is, if two circuits correspond to the same unitary maps, it can be derived from the circuit equalities presented in Fig. 3 of this article.

Of all those fifteen circuits equalities, rules (a), (d), (e), (f), (g), (h), (k), (l), (m), (n) and (o) cannot be obtained via pairwise permutation of commuting gates.

In rules (n) and (o), both sides of the equality are circuits with the same constraints on distributability, that is, the positions of control qubits and target qubits is identical in both circuits. Therefore, applying rules (n) and (o) do not affect distributability. Rules (a), (d), (e), (f), (g), (h), (k), (l), and (m) are equivalences between circuits of different depth.

Therefore, a sequence of gates is distributable up to pairwise permutation of commuting gates if it is distributable up to depth-invariant circuit equivalences.

In other words, in a depth-invariant setting, all distributable packets can be attained with the following rules:
- pairwise permutations of commuting gates,
- concatenation of consecutive distributable packets,
- change of the leading control qubit.

### Rules

According to the invention predefined rules (also called rewriting rules) allow to determine when a sequence of consecutive quantum gates forms a distributable packet up to pairwise permutation of commuting quantum gates.

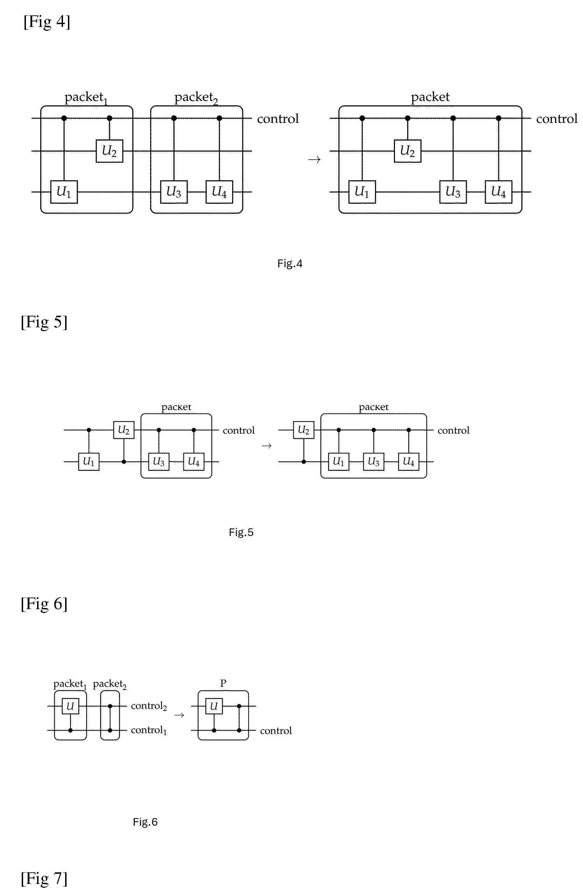

Those rules are, as illustrated in Figures 4-6:
**Concatenation** : If [g,h] and [h,k] are distributable packets rooted in qubit p, then so does [g, h, k]. An example is given in Figure 4.
**Commutation:** If [h,g] is a distributable packet and g and h commute, then [g,h] is a distributable packet up to pairwise permutation. An example is given in Figure 5, where gates U₂ and CU₁ commute.
**Control-switching:** If g is multi-controlled and [flip_c(g),h] is a distributable packet, then so does [g,h]. Flip_c(g) is the gate obtained by switching the control of g for another control qubit c. For 2-qubit gate, control-switching means inverting the control qubit and the target qubit of a control-symmetric gate.

A gate g is multi-controlled if it has more than one control qubit.

A 2-qubit gate g is a control symmetric gate if there is a unitary operator U such that $\left|0\right〉 \left〈0\right| \left(\times \right) I + \left|1\right〉 \left〈1\right| \left(\times \right) U = I \left(\times \right) \left|0\right〉 \left〈0+U\left(\times \right)\right| \left.1\right〉 \left〈1\right| .$

An example is given in Figure 6.

This set of reordering rules preserves distributability, and any packet that is distributable up to pairwise permutations can be derived from the reordering rules.

Applying those reordering rules on the quantum circuit given as input decreases the number of distributable packets, while increasing their size.

To build the distributable packets, the algorithm may iterate through the circuit to identify gates that can be grouped into packets.

The algorithm may work as follows: it identifies the first controlled gate G that is not assigned to a distributable packet, and either moves it to the next group of gates with which it can form a distributable packet or moves subsequent gates next to G so that they form to a distributable packet. Allowed moves are determined by possible pairwise commutation of gates. The algorithm continues until there are no gates outside of a distributable packet.

Applying this algorithm to the example of quantum circuit of top Figure 9 leads to the following steps:
- The gate g0 is the first controlled gate that is not in a distributable packet.
- The gate g0 forms a distributable packet {g0}.
- The gate g2 commutes with the gate g1 so that {g0,g2} forms a distributable packet.
- There is no larger distributable packet than {g0,g2} which includes g0 and gates after g0.
- Define {g0,gl} as a distributable packet and move on to the next controlled gate.
- The gate g1 is the first controlled gate that is not in a distributable packet.
- The gate g1 forms a distributable packet {g1,g4,g3}.
- There is no larger distributable packet than {g1,g4,g3} that includes g1 and gates after g1.
- Return {{g0,g2},{g1,g4,g3}}.

Gate reordering may be performed through the algorithm written in pseudo-code hereunder.

### [ ] Indicate an ordered sequence

Input: an ordered sequence of two-qubit controlled gates and single qubit gates (universal gate set)
Output: reordered sequence with identification of distributable packets
Packets will contain the distributable packets of the reordered sequence of Gates

The guiding principles of the algorithm are the reordering rules detailed above, which are used to create or extend already existing packets. For the output of the algorithm, which is a description of the initial circuit as a sequence of packets, the number of communication protocols necessary to perform the distributed quantum algorithm i.e., the distribution cost, can only decrease or stay the same. It can happen that sometimes, concatenating group packets can result in having the same number of protocols necessary for communication protocols, as if not concatenated. Otherwise, concatenation will reduce the number of communication protocols that are necessary.

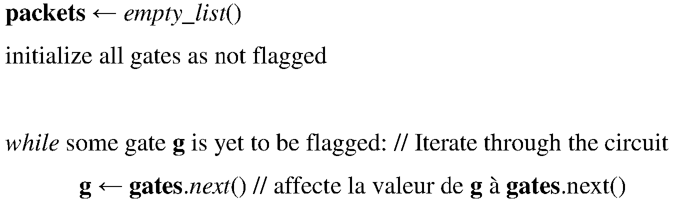

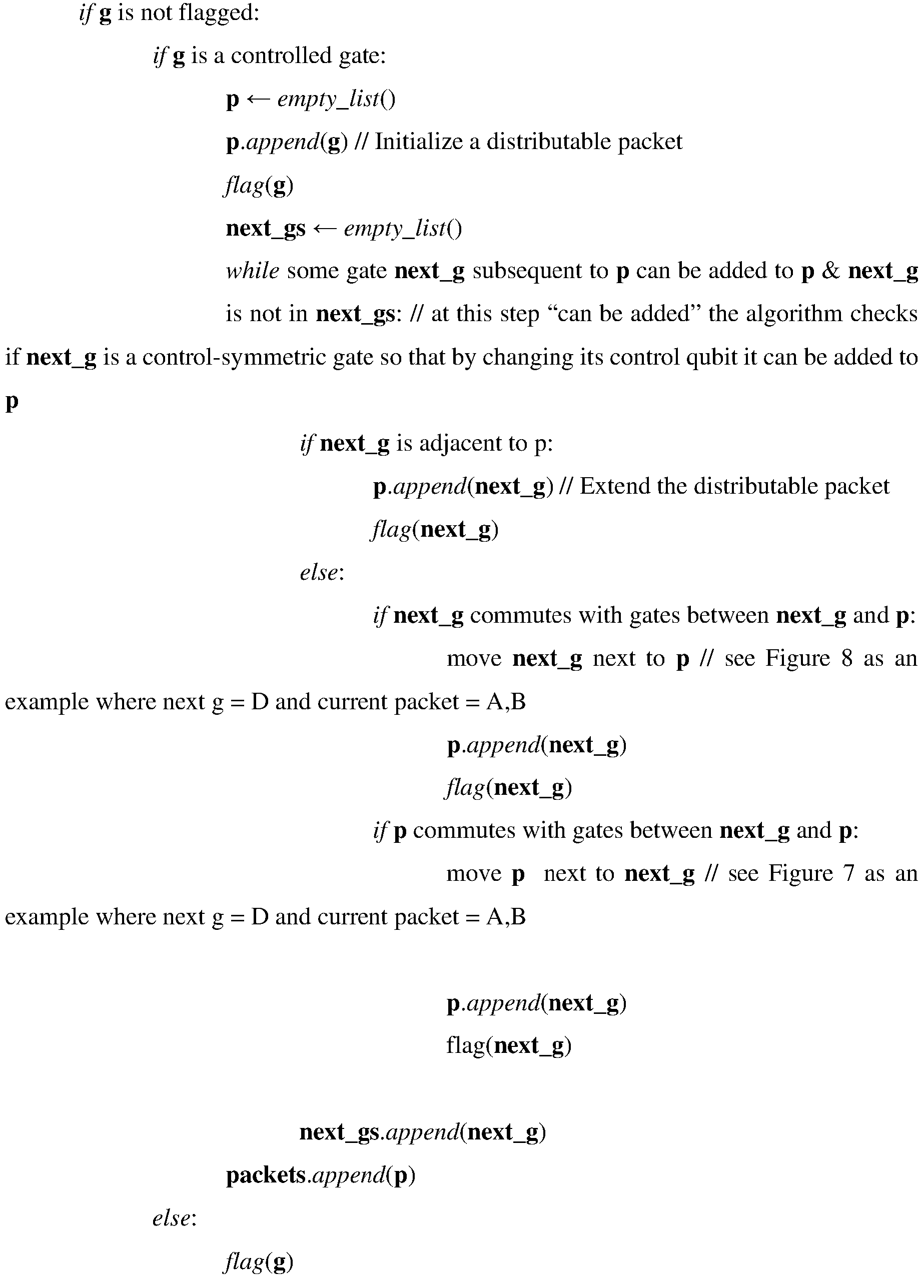

In other words, the algorithm searches for a gate of the quantum circuit that is a controlled gate, then once found starts to build a distributable packet by adding any adjacent (for example subsequent) gates that can be added to the current packet under construction because they satisfy the reordering rules, then the algorithm searches for non-adjacent (for example non-subsequent) gates that
a) could be added to the packet under construction because it satisfies the predefined rules, and that
b1) could be moved after the packet under construction, or
b2) would allow the packet under construction to be moved before the gate because it satisfies the predefined rules, thus possibly reordering the sequence of gates of the initial quantum circuit.

The order in which gates are considered by the algorithm may be from the left of the sequence to the right. It is possible in a variant to parse gates from right to left, by moving subsequent gates to the packet (in reverse order). The algorithm may also start parsing from a gate in a random position, by considering the subcircuit of gates around them which are not yet contained in a distributable packet.

The invention is not limited to the described examples.

The algorithm may be replaced by any other heuristic algorithm.

## Claims

1. A computer implemented method for building distributable packets of a quantum circuit comprising an ordered sequence of controlled gates for execution in a DQC environment, a distributable packet rooted in a qubit c being a sequence of consecutive quantum gates satisfying:
- a) every controlled gate in the distributable packet is controlled by c,
- b) every single-qubit gate that is not diagonal or anti-diagonal in the distributable packet is not controlled by c,
the method comprising building distributable packets by running an algorithm to identify gates that can be grouped into distributable packets, the algorithm comprising testing for possible increase of the number of controlled gates in currently built distributable packets through checking the possible application of a set of rules comprising a concatenation rule, a commutation rule and a control-switching rule.

2. The method of claim 1, the algorithm being a heuristic one that iterates through the quantum circuit.

3. The method of any one of claims 1 and 2, the gates being considered by the algorithm from one end of the sequence to the other end.

4. The method of any one of claims 1 and 2, the gates being scanned by the algorithm starting from a random position in the sequence and the algorithm considering subcircuits of gates which are not yet contained in a distributable packet.

5. The method of any one of claims 1 to 4, comprising identifying a controlled gate G that is not assigned yet to a distributable packet, and either moving it to a group of gates with which it can form a distributable packet, or moving additional gates next to G so that they form to a distributable packet, allowed moves be determined by possible pairwise commutation of gates, the method being performed until there are no gates outside of a distributable packet.

6. The method according to any one of the preceding claims, comprising for a given distributable packet built during the course of the algorithm building a larger packet by adding to this packet a gate that is not subsequent to the packet in the sequence.

7. The method according to any one of the preceding claims, comprising for a given distributable packet built during the course of the algorithm building a larger packet by moving the packet in the sequence.

8. The method of claim 7, the packet being moved before a gate with which it can form a larger distributable packet.

9. The method according to any one of the preceding claims, the algorithm being performed without transpilation of at least one gate of the quantum circuit other than Hadamard, Rz and CRz, prior to commuting this gate with another controlled gate.

10. The method according to any one of the preceding claims, the circuit comprising at least one gate other than H and CNOT, selected among SWAP, CV, iSWAP(theta), Givens(theta), fSim and Sycamore, such gate not having been transpiled before execution of the algorithm.

11. A method for DQC implementation of a quantum circuit comprising performing the method of any one of claims 1 to 10 to determine distributable packets that minimize communication qubits and implementing the quantum circuit on a DQC environment based on said distributable packets.

12. A computer readable program product comprising a set of instructions that when executed on a computer system generate distributable packets based on an inputted quantum circuit comprising an ordered sequence of controlled gates, for execution of said quantum circuit in a DQC environment, a distributable packet rooted in a qubit c being a sequence of consecutive quantum gates satisfying :
- a) every controlled gate in the distributable packet is controlled by c,
- b) every single-qubit gate that is not diagonal or anti-diagonal in the distributable packet is not controlled by c,
the instructions causing the iteration of an algorithm, preferably a heuristic one, through the quantum circuit to identify gates that can be grouped into distributable packets, the algorithm comprising testing for possible increase of the number of controlled gates in currently built distributable packets through checking the possible application of a set of rules comprising a concatenation rule, a commutation rule and a control-switching rule.
